# EUROPEAN PATENT APPLICATION

(11) **EP 1 876 800 A1**
(43) Date of publication of application: **09.01.2008**
(21) Application number: 05736576.9
(22) Date of filing: 27.04.2005
(51) Int. Cl.: H04M 1/00, H04B 7/26

(54) **MOBILE TELEPHONE, STATUS SWITCHING METHOD IN MOBILE TELEPHONE, AND TRANSMITTER**

(71) Applicant: MITSUBISHI DENKI KABUSHIKI KAISHA, Chiyoda-ku, Tokyo 100-8310 (JP)
(72) Inventor: AKIYAMA, Koji, Mitsubishi Denki Kabushiki Kaisha, Tokyo 1008310 (JP)
(74) Representative: Popp, Eugen
(86) International application number: PCT/JP2005/007998
(87) International publication number: WO 2006/117843

(57) **Abstract**

A state switching method includes the steps of: receiving a state switching instruction signal for instructing a local terminal to switch to at least one of two or more states; determining whether to switch the local terminal to the state specified by the above-mentioned state switching instruction signal on the basis of a user setting stored in a memory of the local terminal; and carrying out a control operation of switching the local terminal to the state specified by the above-mentioned state switching instruction signal when, in the above-mentioned determining step, it is determined that the switching of the local terminal to the state specified by the above-mentioned state switching instruction signal will be carried out.

## Description

### Field of the Invention

The present invention relates to a mobile phone which automatically switches between states when receiving a state switching instruction signal for instructing the mobile phone to switch between states, a state switching method for use in the mobile phone, and a transmitter which transmits the state switching instruction signal.

### Background of the Invention

Conventionally, the user of a mobile phone needs to change the state of the mobile phone to either a power supply OFF state or a manner mode by manual operation when entering a location, such as a movie theater, a library, or an art museum, where mobile phone owners are responsible to turn off the ringer tone.

On the other hand, JP, 2001-78263,A discloses an automatic state switching method of transmitting a state switching instruction signal for instructing mobile phones to switch between states to a mobile phone by including it in a "perch channel" in a downlink direction for use in a PDC system mobile phone system which has been mainly spread in Japan (i.e., in a direction from a base station to mobile phones), so as to make the mobile phone to automatically change the state of the local terminal to a state specified by the state switching instruction signal in response to the state switching instruction signal.

A problem with this automatic state switching method is, however, that because the mobile phone forcedly changes its state in response to the state switching instruction signal, the mobile phone may freely change its state to a state which the user does not intend.

For example, there is a possibility that when the mobile station enters a location where mobile phones have only to switch to a manner mode (also called a silent mode) in which they turn off the ringer tone and turn on vibrations for notifying an incoming call while remaining in the ON state, the power supply of the mobile phone is automatically turned OFF in response to a state switching instruction signal, and therefore the user misses an opportunity to have an important telephone conversation and hence has complaints.

[Patent reference 1] JP,2001-78263,A

### Disclosure of the Invention

### Problems to be Solved by the Invention

The present invention is made in view of the above-mentioned circumstances, and it is therefore an object of the present invention to provide a mobile phone which settles user complaints about state switching and provides great convenience to users, in a mobile phone system which transmits a state switching instruction signal for instructing mobile phones to switch between states to mobile phones so that each of the mobile phones changes the state of the local terminal according to the state switching instruction signal, a state switching method for use in mobile phones, and a transmitter for transmitting the state switching instruction signal.

### Means for Solving the Problems

In accordance with the present invention, there is provided a state switching method for use in a mobile phone which switches between two or more states including at least a state in which a ringer tone is switched on and a state in which a ringer tone is switched off, the method including the steps of: receiving a state switching instruction signal for instructing the local terminal to switch to at least one of the above-mentioned two or more states; determining whether to switch the local terminal to a state specified by the above-mentioned state switching instruction signal on a basis of a user setting stored in a memory of the local terminal; and carrying out a control operation of switching the local terminal to the state specified by the above-mentioned state switching instruction signal when, in the above-mentioned determining step, it is determined that the switching of the local terminal to the state specified by the above-mentioned state switching instruction signal will be carried out. Advantages of the Invention

The state switching method for use in a mobile phone in accordance with the present invention includes the steps of: receiving a state switching instruction signal for instructing a local terminal to switch to at least one of two or more states; determining whether to switch the local terminal to the state specified by the above-mentioned state switching instruction signal on the basis of a user setting stored in a memory of the local terminal; and carrying out a control operation of switching the local terminal to the state specified by the above-mentioned state switching instruction signal when, in the above-mentioned determining step, it is determined that the switching of the local terminal to the state specified by the above-mentioned state switching instruction signal will be carried out. Therefore, the mobile phone which provides a great convenience for the user can be made to switch between states.

### Brief Description of the Figures

[Fig. 1] Fig. 1 is a diagram illustrating a mobile phone system in accordance with embodiment 1 of the present invention;
[Fig. 2] Fig. 2 is a block diagram illustrating the structure of a transmitter 1 shown in Fig. 1;
[Fig. 3] Fig. 3 is a block diagram illustrating the structure of a mobile phone 2 shown in Fig. 1;
[Fig. 4] Fig. 4 is a flow chart explaining the operation of a state switching control unit 24;
[Fig. 5] Fig. 5 is a block diagram illustrating the structure in embodiment 2 of the transmitter 1 shown in Fig. 1;
[Fig. 6] Fig. 6 is a block diagram illustrating the structure in embodiment 2 of the mobile phone 2 shown in Fig. 1;
[Fig. 7] Fig. 7 is a diagram illustrating user settings stored in a memory unit 27 in the mobile phone 2 of Fig. 6 in the form of a table;
[Fig. 8] Fig. 8 is a flow chart explaining the operation of a state switching control unit 61 of Fig. 6;
[Fig. 9] Fig. 9 is a block diagram illustrating the structure in embodiment 2 of the transmitter 1 shown in Fig. 1;
[Fig. 10] Fig. 10 is a block diagram illustrating the structure in embodiment 3 of the mobile phone 2 shown in Fig. 1;
[Fig. 11] Fig. 11 is a block diagram illustrating user settings stored in a memory unit 27 of the mobile phone 2 of Fig. 10 in the form of a table;
[Fig. 12] Fig. 12 is a flow chart explaining the operation of a state switching control unit 62 of Fig. 10;
[Fig. 13] Fig. 13 is a block diagram illustrating the structure in embodiment 4 of the transmitter 1 shown in Fig. 1;
[Fig. 14] Fig. 14 is a block diagram illustrating the structure in embodiment 4 of the mobile phone 2 shown in Fig. 1;
[Fig. 15] Fig. 15 is a block diagram illustrating user settings stored in a memory unit 27 of the mobile phone 2 of Fig. 14 in the form of a table;
[Fig. 16] Fig. 16 is a flow chart explaining the operation of a state switching control unit 63 of Fig. 13;
[Fig. 17] Fig. 17 is a flow chart illustrating the operation of the mobile phone 2 in a user setting input mode;
[Fig. 18] Fig. 18 is a diagram illustrating a mobile phone system in a case of transmitting a state switching instruction signal while including it in a "perch channel"; and
[Fig. 19] Fig. 19 is a diagram illustrating a mobile phone system in accordance with this embodiment 7.

### Explanation of Reference Numerals

1 Transmitter 2 Mobile phone 12 State identifier storage unit 13 State switching instruction signal generating unit 14 Radio transmission unit 24 State switching control unit. Preferred Embodiments of the Invention

### Embodiment 1.

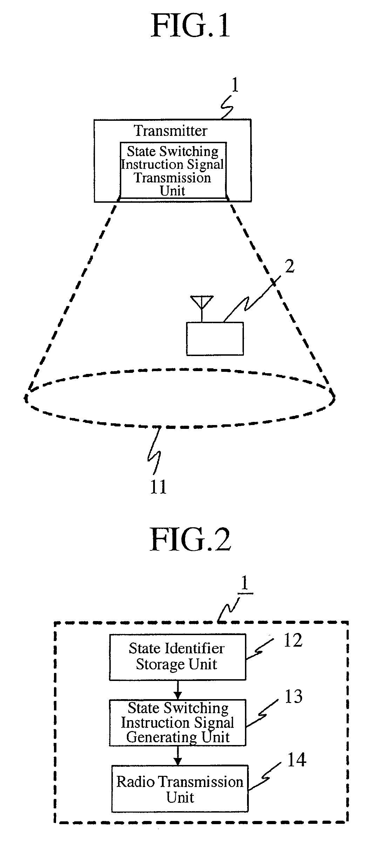

Fig. 1 is a diagram illustrating a mobile phone system in accordance with embodiment 1 of the present invention. In Fig. 1, reference numeral 1 denotes a transmitter disposed in the vicinity of a location, such as a movie theater, a library, or an art museum, where mobile phones are responsible to switch between states, for transmitting a state switching instruction signal for instructing mobile phones staying in a transmission range 11 to switch between states, and reference numeral 2 denotes a mobile phone which is staying in the transmission range 11 of the state switching instruction signal, and which changes its state to a state specified by the received state switching instruction signal.

Fig. 2 is a block diagram illustrating the structure of the transmitter 1 shown in Fig. 1. In Fig. 2, reference numeral 12 denotes a state identifier storage unit for storing a state identifier which is incorporated in the state switching instruction signal, reference numeral 13 denotes a state switching instruction signal generating unit for generating the state switching instruction signal, and reference numeral 14 denotes a radio transmission unit for transmitting the state switching instruction signal to the transmission range 11.

The state identifier which the state identifier storage unit 12 stores is an identifier which is associated with at least one of two or more states in which a general mobile phone can operate. The transmitter 1 instructs mobile phones staying in the transmission range 11 to switch to the state corresponding to the state identifier by transmitting the state switching instruction signal while incorporating the state identifier stored in this state identifier storage unit 12 in the state switching instruction signal.
For example, different state identifiers "1", "2", and "3" are beforehand associated with a power supply OFF mode, a silent mode, and a normal mode of mobile phones, respectively. In this case, when the transmitter 1 instructs mobile phones staying in the transmission range 11 to switch to the power supply OFF state, "1" which is the state identifier-corresponding to the power supply OFF state is stored in the state identifier storage unit 12, and the transmitter 1 transmits the state switching instruction signal containing the state identifier "1" to the mobile phone staying in the transmission range 11.

It is preferable that the state identifier stored in the state identifier storage unit 12 can be changed. For example, it is preferable that the state identifier stored in the state identifier storage unit can be changed by using either a not-shown input means which is integrally disposed in the transmitter 1 or an input terminal which is connected, by radio or cable, to the transmitter 1. As an alternative, the state identifier stored in the state identifier storage unit can be changed by using a not-shown program or timer stored in the transmitter 1 according to circumstances.

The state identifier storage unit 12 of the transmitter 1 outputs the state identifier stored therein to the state switching instruction signal generating unit 13. The state switching instruction signal generating unit 13 generates a state switching instruction signal containing the state identifier inputted from the state identifier storage unit 12, and outputs it to the radio transmission unit 14. The radio transmission unit 14 transmits the state switching instruction signal generated by the state switching instruction signal generating unit 13 to the transmission range 11 in a transmission form which the mobile phone 2 can receive.

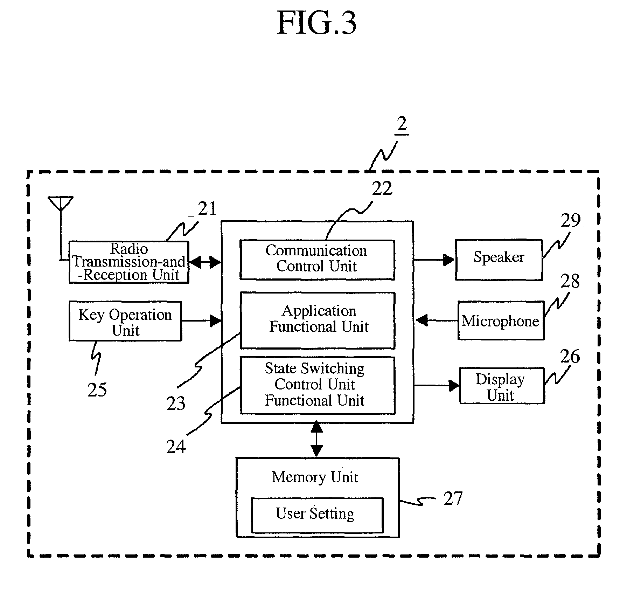

Fig. 3 is a block diagram illustrating the structure of the mobile phone 2 shown in Fig. 1. The mobile phone 2 is provided with a radio transmission-and-reception unit 21, a communication control unit 22, an application functional unit 23, a state switching control unit 24, a key operation unit 25, a display unit 26, a memory unit 27, a microphone unit 28, and a speaker unit 29.

When the user of the mobile phone 2 has a conversation with another phone via a not-shown base station, the mobile phone outputs a voice signal received from the radio transmission-and-reception unit 21 to the speaker unit 29 and transmits a voice signal inputted from the microphone unit 28 through the radio transmission-and-reception unit 21.
The mobile phone 2 has the application functional unit 23 for executing an application program, so as to enable the user to play various games, have a Web access, create an e-mail message, browse an e-mail message, etc. For example, the application functional unit 23 displays a game screen on the display unit 26, and changes the game screen displayed on the display unit 26 according to an input from the key operation unit 25. The application functional unit 23 displays an e-mail message created according to an input from the key operation unit 25 on the display unit 26, and transmits the created e-mail message through the radio transmission-and-reception unit 21. The application function unit 23 stores an e-mail message received via the radio transmission-and-reception unit 21 in the memory unit 27, and displays the e-mail message stored in the memory unit 27 on the display unit 26 according to an input from the key operation unit 25. The application functional unit 23 connects to the Internet via the radio transmission-and-reception unit 21 according to an input from the key operation unit 25, and displays information acquired from the Internet on the display unit 26.

The communication control unit 22 is a communication control unit which controls communications with a base station which are needed in these telephone call process, Web access process, e-mail, process, etc., i.e., various communications with a base station via the radio transmission-and-reception unit 21. For example, the communication control unit 22 receives electric waves from two or more base stations, and carries out a cell search process of selecting a base station which becomes a communications partner, and a login process of establishing a radio link with a base station which is selected through the cell search process by controlling the radio transmission-and-reception unit 21.

User settings which the user sets up by inputting with the key operation unit 25 are stored in the memory unit 27. For example, the user can set up how the mobile phone 2 operates at the time of reception of the state switching instruction signal by making a user setting according to the user's liking. To be more specific, by making a user setting, the user can make the mobile phone 2 operate in such a manner as shown in either of (1) to (5) at the time of reception of the state switching instruction signal.
(1) The mobile phone 2 automatically changes the state of the local terminal (i.e., the mobile phone 2) to the state specified by the state switching instruction signal when receiving the state switching instruction signal.
(2) The mobile phone 2 does not change the state of the local terminal regardless of the state specified by the state switching instruction signal when receiving the state switching instruction signal.
(3) The mobile phone 2 automatically changes the state of the local terminal to the power supply OFF state regardless of the state specified by the state switching instruction signal when receiving the state switching instruction signal.
(4) The mobile phone 2 automatically changes the state of the local terminal to the manner mode (i.e., the silent mode) in which the ringer tone is placed in its OFF state with the power supply being held in its ON state regardless of the state specified by the state switching instruction signal when receiving the state switching instruction signal.
(5) The mobile phone 2 automatically changes the state of the local terminal to the normal mode in which the power supply is placed in its ON state and the ringer tone is placed in its ON state regardless of the state specified by the state switching instruction signal when receiving the state switching instruction signal.

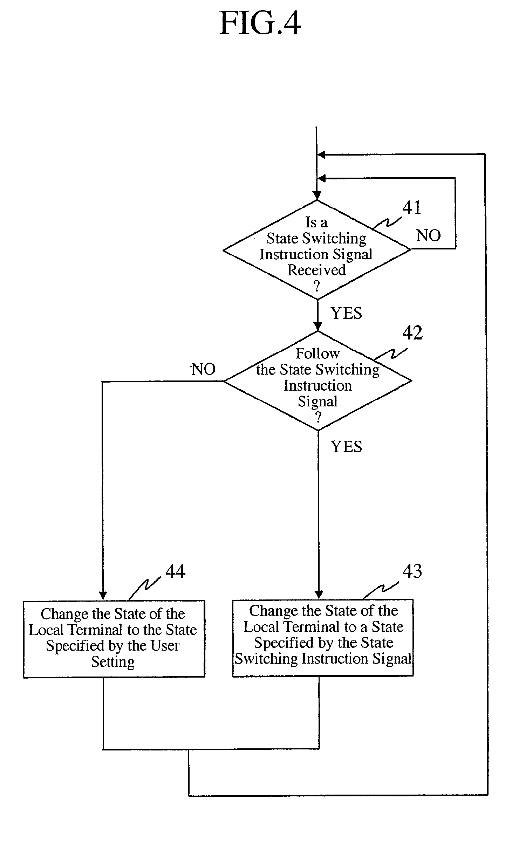

The operation of the state switching control unit 24 shown in Fig. 3 will be explained hereafter . Fig. 4 is a flow chart explaining the operation of the state switching control unit 24 of Fig. 3. The state switching control unit 24 of Fig. 3 awaits and detects reception of the state switching instruction signal by the radio transmission-and-reception unit 21 (step 41). When, in step 41, detecting reception of the state switching instruction signal, the state switching control unit 24 determines whether to change the state of the local terminal, i.e., the state of the mobile phone 2, to the state specified by the received state switching instruction signal, i.e., the state corresponding to the state identifier included in the state switching instruction signal on the basis of the user settings stored in the memory unit 27 of Fig. 3 (step 42). When, in step 42, determining to change the state of the local terminal to the state specified by the received state switching instruction signal, the state switching control unit 24 carries out a control operation of changing the state of the local terminal to the state specified by the received state switching instruction signal (step 43). When, in step 42, determining not to change the state of the local terminal to the state specified by the received state switching instruction signal, the state switching control unit 24 carries out a control operation of either not changing the state of the local terminal or changing the state of the local terminal to the state specified by the user settings (step 44).

As previously explained, in accordance with this embodiment 1, a transmitter for transmitting a state switching instruction signal which instructs mobile phones to switch to a certain state is disposed in the vicinity of a location, such as a movie theater, a library, or an art museum, where mobile phones are responsible to switch between states, and a mobile phone judges whether to change the state of the local terminal to a state specified by the state switching instruction signal on the basis of user settings stored in the memory of the local terminal when receiving the state switching instruction signal. Therefore, there can be provided a mobile phone which can be prevented from forcedly changing to a state which the user of the mobile phone does not desire and which provides a great convenience for the user, and a mobile phone system including such mobile phones.

### Embodiment 2.

In accordance with this embodiment, the state switching instruction signal transmitted from the transmitter 1 of Fig. 1 can include an identifier corresponding to a location where mobile phones are responsible to switch between states according to the state switching instruction signal, and the mobile phone 2 of Fig. 1 can store a different user setting for every identifier.

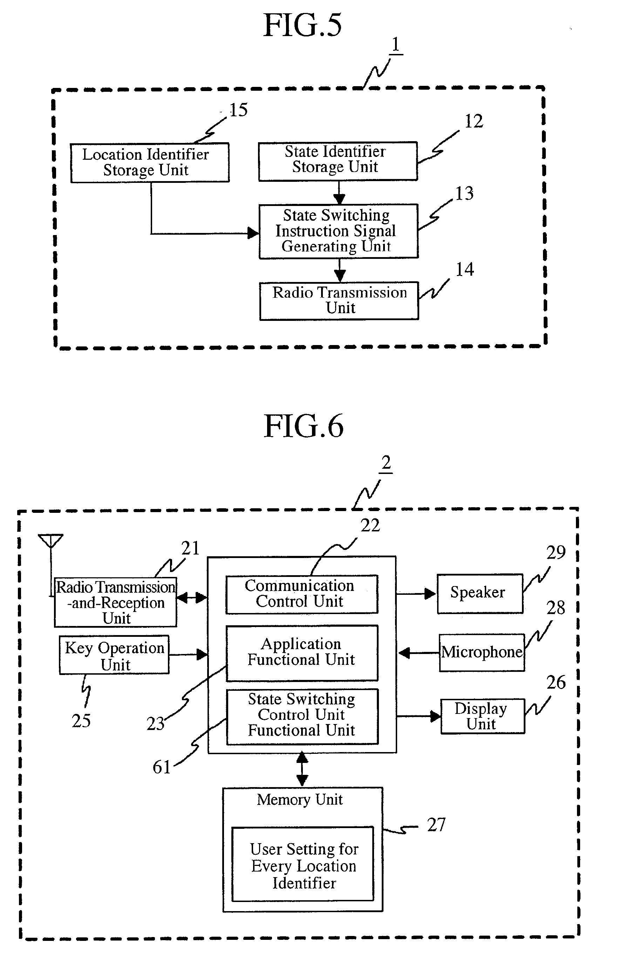

Fig. 5 is a block diagram illustrating the structure in this embodiment 2 of the transmitter 1 shown in Fig. 1. In Fig. 5, the same reference numerals as shown in Fig. 2 denote the same components as shown in Fig. 1 or like components, and therefore the explanation of the components will be omitted hereafter.
In Fig. 5, reference numeral 15 denotes a location identifier storage unit for storing a location identifier which is an identifier corresponding to a location where mobile phones are responsible to switch between states according to the state switching instruction signal transmitted from the transmitter 1. For example, either a serial number inherently assigned to the transmitter 1 or a binary number which is acquired by ASCII-code converting or JIS-code converting the name (for example, "A city library") of the location where the transmitter 1 is disposed can be used as the location identifier.

The location identifier stored in the location identifier storage unit 15 can be changed. For example, the location identifier stored in the location identifier storage unit can be changed by using either a not-shown input means which is integrally disposed in the transmitter 1 or an input terminal which is connected, by radio or cable, to the transmitter 1.

The operation of the transmitter 1 shown in Fig. 5 will be explained. The state identifier storage unit 12 of the transmitter 1 outputs the state identifier stored therein to the state switching instruction signal generating unit 13, and the location identifier storage unit 15 outputs the location identifier stored therein to the state switching instruction signal generating unit 13. The state switching instruction signal generating unit 13 generates a state switching instruction signal containing the state identifier and the location identifier which are respectively inputted from the state identifier storage unit 12 and the location identifier storage unit 15, and outputs the state switching instruction signal to the radio transmission unit 14. The radio transmission unit 14 transmits the state switching instruction signal generated by the state switching instruction signal generating unit 13 to the transmission range 11 in a transmission form which the mobile phone 2 can receive.

Fig. 6 is a block diagram illustrating the structure in this embodiment 2 of the mobile phone 2 shown in Fig. 1. In Fig. 6, the same reference numerals as shown in Fig. 3 denote the same components as shown in Fig. 3 or like components, and therefore the explanation of the components will be omitted hereafter. In the mobile phone 2 shown in Fig. 6, the user settings stored in the memory unit 27 and the operation of the state switching control unit 61 differ from those of the mobile phone 2 shown in Fig. 3.

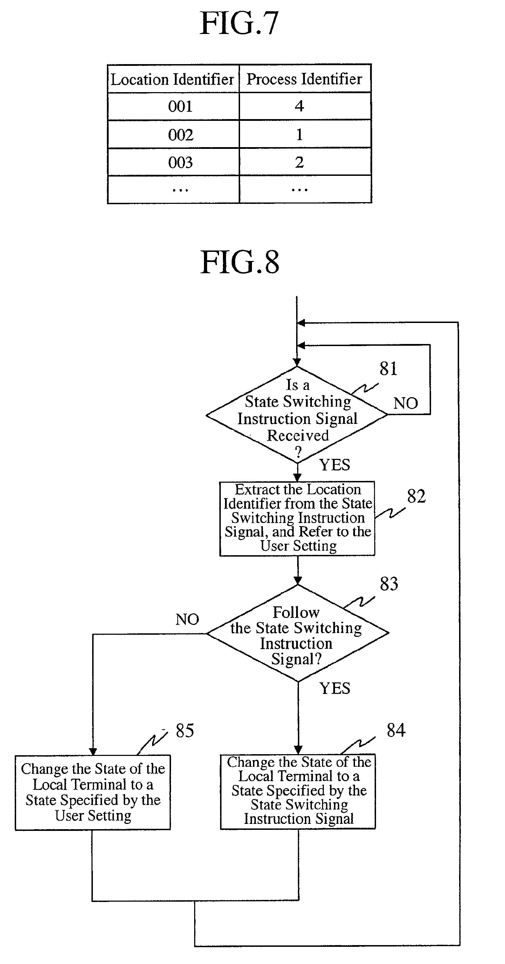

Fig. 7 illustrates the user settings stored in the memory unit 27 of the mobile phone 2 of Fig. 6 in the form of a table. The user settings stored in the memory unit 27 can be inputted and changed through the user's manipulation of the key operation unit 25 of the mobile phone 2.
In Fig. 7, location identifiers "001", "002", and "003" correspond to "A city library", "A city art museum", and "B city library", respectively, and process identifiers "1" to "5" correspond to the following operations (1) to (5), respectively.
(1) The mobile phone 2 automatically changes the state of the local terminal (i.e., the mobile phone 2) to the state specified by the state switching instruction signal when receiving the state switching instruction signal.
(2) The mobile phone 2 does not change the state of the local terminal regardless of the state specified by the state switching instruction signal when receiving the state switching instruction signal.
(3) The mobile phone 2 automatically changes the state of the local terminal to the power supply OFF state regardless of the state specified by the state switching instruction signal when receiving the state switching instruction signal.
(4) The mobile phone 2 automatically changes the state of the local terminal to the manner mode (i.e., the silent mode) in which the ringer tone is placed in its OFF state with the power supply being held in its ON state regardless of the state specified by the state switching instruction signal when receiving the state switching instruction signal.
(5) The mobile phone 2 automatically changes the state of the local terminal to the normal mode in which the power supply is placed in its ON state and the ringer tone is placed in its ON state regardless of the state specified by the state switching instruction signal when receiving the state switching instruction signal.

In the example shown in Fig. 7, when receiving the state switching instruction signal containing the location identifier "001", the mobile phone 2 automatically changes the state of the local terminal to the manner mode regardless of the state specified by the state switching instruction signal (i.e., carries out the process associated with the process identifier "4"). More specifically, the mobile phone 2 in which the user settings of Fig. 7 are made automatically changes its state to the manner mode when entering "A city library".
Furthermore, in the example shown in Fig. 7, when receiving the state switching instruction signal containing the location identifier "002", the mobile phone 2 automatically changes the state of the local terminal to the state specified by the received state switching instruction signal, i.e., the state corresponding to the state identifier included in the state switching instruction signal (i.e., carries out the process associated with the process identifier "1"). More specifically, the mobile phone 2 in which the user settings of Fig. 7 are made automatically changes its state to the state specified by the state switching instruction signal when entering "A city art museum."

The operation of the state switching control unit 61 of Fig. 6 will be explained. Fig. 8 is a flow chart explaining the operation of the state switching control unit 61 of Fig. 6. The state switching control unit 61 awaits and detects reception of the state switching instruction signal by the radio transmission-and-reception unit 21 of Fig. 6 (step 81). When detecting reception of the state switching instruction signal in step 81, the state switching control unit 61 extracts the location identifier included in the received state switching instruction signal, and determines whether to change the state of the local terminal to the state specified by the state switching instruction signal (step 83) on the basis of the location identifier extracted and the user settings stored in the memory unit 27 (step 82). When, in step 83, determining to change the state of the local terminal to the state specified by the state switching instruction signal, the state switching control unit 61 carries out a control operation of changing the state of the local terminal to the state specified by the received state switching instruction signal (step 84). When, in step 83, determining not to change the state of the local terminal to the state specified by the state switching instruction signal, the state switching control unit 61 carries out a control operation of either not changing the state of the local terminal or changing the state of the local terminal to the state specified by the user setting corresponding to the location identifier (step 85).

As mentioned above, in accordance with this embodiment 2, a transmitter for transmitting the state switching instruction signal can incorporate a location identifier corresponding to a location where mobile stations are responsible to switch between states in the state switching instruction signal, and a mobile phone can set up an operation mode thereof for every location identifier. Therefore, the user can change the operation mode of the mobile phone for every location where the mobile phone can receive a state switching instruction signal transmitted thereto. Therefore, a mobile phone which can provide a great convenience for users and a mobile phone system including such mobile phones can be provided.

### Embodiment 3.

In accordance with this embodiment 3, the state switching instruction signal transmitted from the transmitter 1 of Fig. 1 can include an identifier corresponding to the category of a location where mobile phones are responsible to switch between states according to the state switching instruction signal, and the mobile phone 2 of Fig. 1 can store different user settings for every identifier.

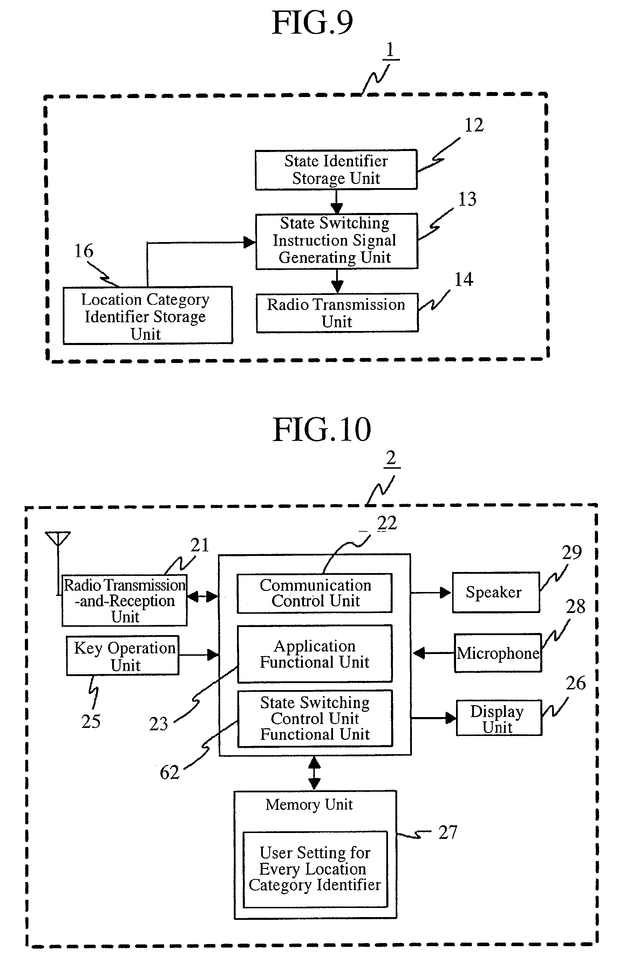

Fig. 9 is a block diagram illustrating the structure in this embodiment 3 of the transmitter 1 shown in Fig. 1. In Fig. 9, the same reference numerals as shown in Fig. 2 denote the same components as shown in Fig. 1 or like components, and therefore the explanation of the components will be omitted hereafter.
In Fig. 9, reference numeral 16 denotes a location category identifier storage unit for storing a location category identifier which is an identifier corresponding to the category of a location where mobile phones are requested to switch between states according to the state switching instruction signal transmitted from the transmitter 1. This location category identifier indicates a facility type, such as a "library", an "art museum", or a "movie theater." For example, a location category identifier "001" is assigned to the "library" category, a location category identifier "002" is assigned to the "art museum" category, and a location category identifier "003" is assigned to the "movie theater" category. A binary number which is acquired by ASCII-code converting or JIS-code converting the name of each facility type (for example, "library") can be used as the location category identifier.

The operation of the transmitter 1 shown in Fig. 9 will be explained hereafter. The state identifier storage unit 12 of the transmitter 1 outputs the state identifier stored therein to the state switching instruction signal generating unit 13, and the location category identifier storage unit 16 outputs the location category identifier stored therein to the state switching instruction signal generating unit 13. The state switching instruction signal generating unit 13 generates a state switching instruction signal containing the state identifier and the location category identifier which are respectively inputted from the state identifier storage unit 12 and the location category identifier storage unit 16, and outputs the state switching instruction signal to the radio transmission unit 14. The radio transmission unit 14 transmits the state switching instruction signal generated by the state switching instruction signal generating unit 13 to the transmission range 11 in a transmission form which the mobile phone 2 can receive.

Fig. 10 is a block diagram illustrating the structure in this embodiment 3 of the mobile phone 2 shown in Fig. 1. In Fig. 10, the same reference numerals as shown in Fig. 3 denote the same components as shown in Fig. 3 or like components, and therefore the explanation of the components will be omitted hereafter. In the mobile phone 2 shown in Fig. 10, the user settings stored in the memory unit 27 and the operation of the state switching control unit 62 differ from those of the mobile phone 2 shown in Fig. 1.

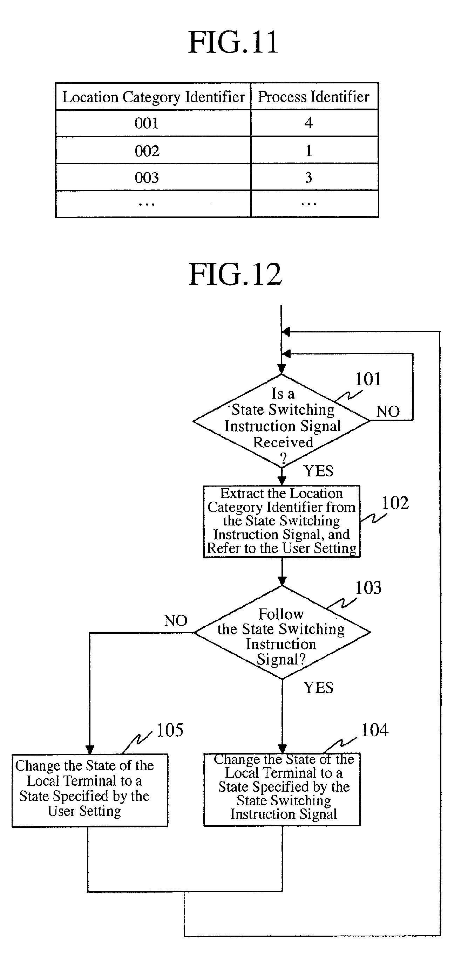

Fig. 11 illustrates the user settings stored in the memory unit 27 of the mobile phone 2 of Fig. 10 in the form of a table. The user settings stored in the memory unit 27 can be inputted and changed through the user' s manipulation of the key operation unit 25 of the mobile phone 2.
In Fig. 7, the location category identifiers "001", "002", and "003" correspond to "library", "art museum", and "movie theater", respectively, and process identifiers "1" to "5" correspond to the following operations (1) to (5), respectively.
(1) The mobile phone 2 automatically changes the state of the local terminal (i.e., the mobile phone 2) to the state specified by the state switching instruction signal when receiving the state switching instruction signal.
(2) The mobile phone 2 does not change the state of the local terminal regardless of the state specified by the state switching instruction signal when receiving the state switching instruction signal.
(3) The mobile phone 2 automatically changes the state of the local terminal to the power supply OFF state regardless of the state specified by the state switching instruction signal when receiving the state switching instruction signal.
(4) The mobile phone 2 automatically changes the state of the local terminal to the manner mode (i.e., the silent mode) in which the ringer tone is placed in its OFF state with the power supply being held in its ON state regardless of the state specified by the state switching instruction signal when receiving the state switching instruction signal.
(5) The mobile phone 2 automatically changes the state of the local terminal to the normal mode in which the power supply is placed in its ON state and the ringer tone is placed in its ON state regardless of the state specified by the state switching instruction signal when receiving the state switching instruction signal.

In the example shown in Fig. 11, when receiving the state switching instruction signal containing the location category identifier "001", the mobile phone 2 automatically changes the state of the local terminal to the manner mode regardless of the state specified by the state switching instruction signal (i.e., carries out the process associated with the process identifier "4") . More specifically, the mobile phone 2 in which the user settings of Fig. 7 are made automatically changes its state to the manner mode when entering a library where the state switching instruction signal is transmitted thereto.
Furthermore, in the example shown in Fig. 11, when receiving the state switching instruction signal containing the location category identifier "002", the mobile phone 2 automatically changes the state of the local terminal to the state specified by the received state switching instruction signal, i.e., the state corresponding to the state identifier included in the state switching instruction signal. More specifically, the mobile phone 2 in which the user settings of Fig. 7 are made automatically changes its state to the state specified by the state switching instruction signal when entering an art museum where the state switching instruction signal is transmitted thereto.

The operation of the state switching control unit 62 of Fig. 10 will be explained. Fig. 12 is a flow chart explaining the operation of the state switching control unit 62 of Fig. 10. The state switching control unit 62 awaits and detects reception of the state switching instruction signal by the radio transmission-and-reception unit 21 (step 101). When, in step 101, detecting reception of the state switching instruction signal, the state switching control unit 62 extracts the location category identifier included in the received state switching instruction signal, and determines whether to change the state of the local terminal to the state specified by the state switching instruction signal (step 103) on the basis of the location category identifier extracted and the user settings stored in the memory unit 27 (step 102) . When, in step 103, determining to change the state of the local terminal to the state specified by the state switching instruction signal, the state switching control unit 62 carries out a control operation of changing the state of the local terminal to the state specified by the received state switching instruction signal (step 104) . When, in step 103, determining not to change the state of the local terminal to the state specified by the state switching instruction signal, the state switching control unit 62 carries out a control operation of either not changing the state of the local terminal or changing the state of the local terminal to the state specified by the user setting corresponding to the location category identifier (step 105).

As mentioned above, in accordance with this embodiment 3, the transmitter for transmitting the state switching instruction signal can incorporate the location category identifier corresponding to the category of a location where mobile stations are responsible to switch between states in the state switching instruction signal, and the mobile phone can set up an operation mode thereof for every location category identifier. The user can change the operation mode of the mobile phone for every category of a location where the mobile phone can receive the state switching instruction signal transmitted thereto. Therefore, a mobile phone which can provide a great convenience for users and a mobile phone system including such mobile phones can be provided.

### Embodiment 4.

In this embodiment 4, a case in which a location identifier explained in embodiment 2 and a location category identifier explained in embodiment 3 are included in the state switching instruction signal transmitted from the transmitter.

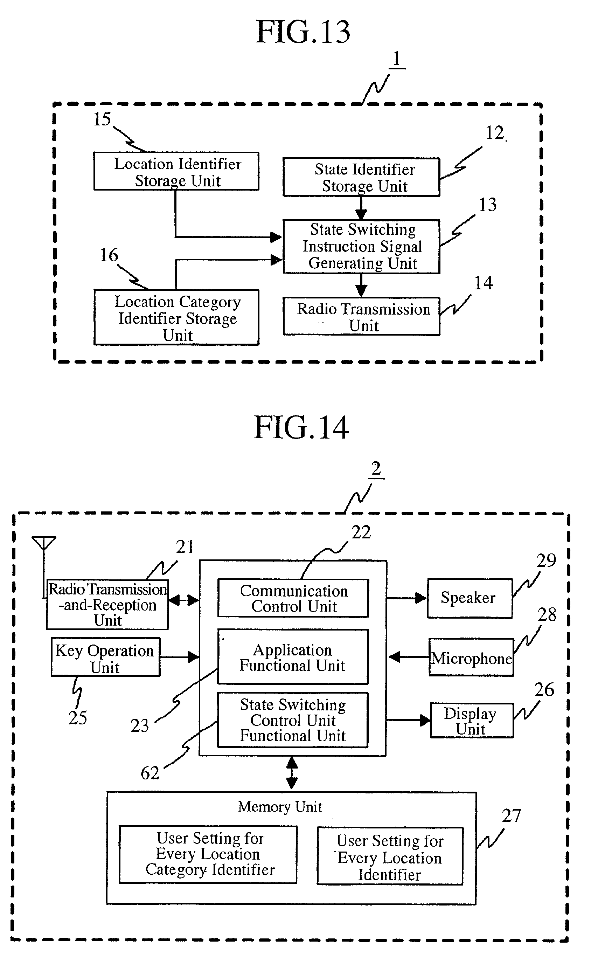

Fig. 13 is a block diagram illustrating the structure in this embodiment 4 of the transmitter 1 shown in Fig. 1. In Fig. 13, the same reference numerals as shown in Fig. 2 denote the same components as shown in Fig. 2 or like components, and therefore the explanation of the components will be omitted hereafter.
In Fig. 13, reference numeral 15 denotes a location identifier storage unit for storing a location identifier which corresponds to a location where mobile phones are responsible to switch between states according to the state switching instruction signal transmitted from the transmitter 1, and reference numeral 16 denotes a location category identifier storage unit for storing a location category identifier which corresponds to the category of the location where mobile phones are responsible to switch between states according to the state switching instruction signal transmitted from the transmitter 1.

The operation of the transmitter 1 shown in Fig. 13 will be explained. The state identifier storage unit 12 of the transmitter 1 outputs a state identifier stored therein to the state switching instruction signal generating unit 13, the location identifier storage unit 15 outputs a location identifier stored therein to the state switching instruction signal generating unit 13, and the location category identifier storage unit 16 outputs a location category identifier stored therein to the state switching instruction signal generating unit 13. The state switching instruction signal generating unit 13 generates a state switching instruction signal containing the state identifier, the location identifier, and the location category identifier which are respectively inputted from the state identifier storage unit 12, the location identifier storage unit 15, and the location category identifier storage unit 16, and outputs the state switching instruction signal to the radio transmission unit 14. The radio transmission unit 14 transmits the state switching instruction signal generated by the state switching instruction signal generating unit 13 to the transmission range 11 in a transmission form which the mobile phone 2 can receive.

Fig. 14 is a block diagram illustrating the structure in this embodiment 4 of the mobile phone 2 shown in Fig. 1. In Fig. 14, the same reference numerals as shown in Fig. 3 denote the same components as shown in Fig. 3 or like components, and therefore the explanation of the components will be omitted hereafter. The mobile phone 2 shown in Fig. 14 differs from the mobile phone 2 shown in Fig. 1 in the user settings stored in the memory unit 27 and the operation of the state switching control unit 63.

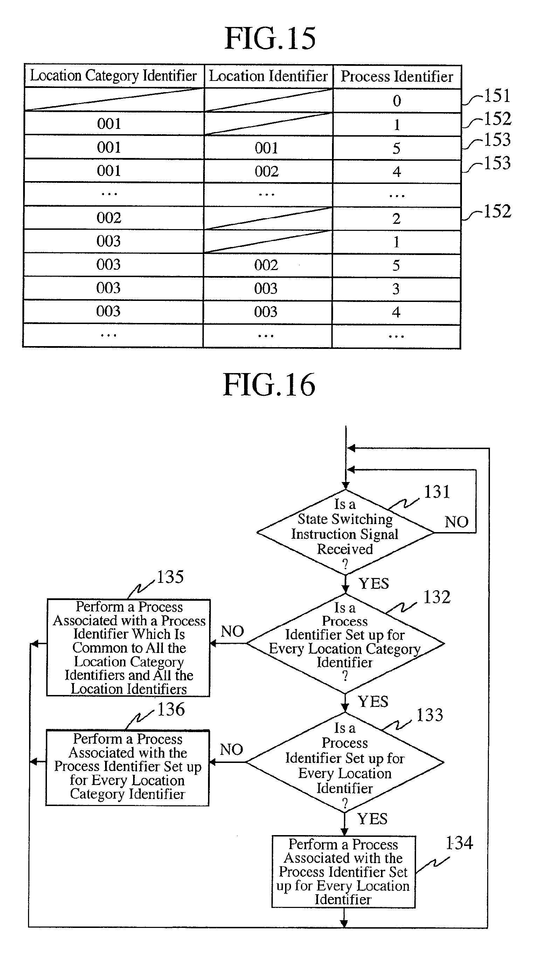

Fig. 15 illustrates the user settings stored in the memory unit 27 of the mobile phone 2 of Fig. 14 in the form of a table. The user settings stored in the memory unit 27 can be inputted and changed through the user's manipulation of the key operation unit 25 of the mobile phone 2.

In Fig. 15, location category identifiers "001", "002", and "003" correspond to "library", "art museum", and "movie theater", respectively, location identifiers "001" and "002" which are associated with the location category identifier "001" correspond to "A city library" and "B city library", respectively, and process identifiers "0" to "5" correspond to the following operations (0) to (5), respectively.
(0) Refer to the user setting for every location category identifier.
(1) Refer to the user setting for every location identifier.
(2) The mobile phone 2 automatically changes the state of the local terminal (i.e., the mobile phone 2) to the state specified by the state switching instruction signal when receiving the state switching instruction signal.
(3) The mobile phone 2 does not change the state of the local terminal regardless of the state specified by the state switching instruction signal when receiving the state switching instruction signal.
(4) The mobile phone 2 automatically changes the state of the local terminal to the power supply OFF state regardless of the state specified by the state switching instruction signal when receiving the state switching instruction signal.
(5) The mobile phone 2 automatically changes the state of the local terminal to the manner mode (i.e., the silent mode) in which the ringer tone is placed in its OFF state with the power supply being held in its ON state regardless of the state specified by the state switching instruction signal when receiving the state switching instruction signal.

In Fig. 15, reference numeral 151 denotes a memory area for batch setting of associating an identical process identifier with all the location category identifiers and all the location identifiers, reference numeral 152 denotes a memory area for associating an identical process identifier with all the location identifiers for every location category identifier, and reference numeral 153 denotes a memory area for associating a process identifier with each location identifier for every location category identifier.
The mobile phone 2 refers to the memory area 151 first when receiving the state switching instruction signal, and, when the process identifiers "2" to "5" are not stored in the memory area 151, but the process identifier "0" is stored in the memory area 151, then refers to the memory area 152 corresponding to the location category identifier included in the received state switching instruction signal, whereas when the process identifiers "2" to "5" are not stored in the memory area 152, but the process identifier "1" is stored in the memory area 152, the mobile phone 2 refers to the process identifier 153 corresponding to the location category identifier and the location identifier which are included in the received state switching instruction signal. The mobile phone 2 refers to these memories 151 to 153 one by one, and activates the process associated with the process identifier to which it has referred.

In the example shown in Fig. 15, when the mobile phone 2 receives the state switching instruction signal containing the location category identifier "001" and the location identifier "001", the mobile phone 2 refers to the process identifier stored in the memory area 151 for batch setting first, then refers to the memory area 152 corresponding to the location category identifier "001" because the process identifier is "0", and further refers to the memory area 153 corresponding to the location category identifier "001" and the location identifier "001" so as to acquire the process identifier "5" because the process identifier of the memory area 152 is "1." As a result, the mobile phone changes the state of the local terminal to the manner mode automatically.
In the example shown in Fig. 15, when receiving the state switching instruction signal containing the location category identifier "002" and the location identifier "001", the mobile phone 2 refers to the process identifier stored in the memory area 151 for batch setting first, then refers to the memory area 152 corresponding to the location category identifier "002" because the process identifier is "0", and automatically changes the state of the local terminal to the state corresponding to the state identifier included in the received state switching instruction signal because the process identifier of the memory area is "2."

The operation of the state switching control unit 63 of Fig. 14 will be explained. Fig. 16 is a flow chart explaining the operation of the state switching control unit 63 of Fig. 14. The state switching control unit 63 awaits and detects reception of the state switching instruction signal by the radio transmission-and-reception unit 21 of Fig. 14 (step 131) . When, in step 131, detecting reception of the state switching instruction signal, the state switching control unit 63 refers to the process identifier stored in the memory area 151 shown in Fig. 15 (step 132).

When, in step 132, the process identifier stored in the memory area 151 specifies reference of the user setting for every location category identifier, the state switching control unit extracts the location category identifier from the received state identification indication signal, and refers to the process identifier 152 which corresponds to the extracted location category identifier (step 133). When, in step 132, the process identifier stored in the memory area 151 does not specify reference of the user setting for every location category identifier, the state switching control unit carries out the process associated with the process identifier stored in the memory area 151, and then returns to step 131 (step 135) .

When, in step 133, the process identifier 152 specifies reference of the user setting for every location identifier, the state switching control unit extracts the location identifier from the received state identification indication signal, and refers to the process identifier 153 which corresponds to the location category identifier already extracted and also corresponds to the extracted location identifier (step 134). When, in step 133, the process identifier 152 corresponding to the location category identifier does not specify reference of the user setting for every location identifier, the state switching control unit carries out the process associated with the process identifier 152 and returns to step 131 (step 136).

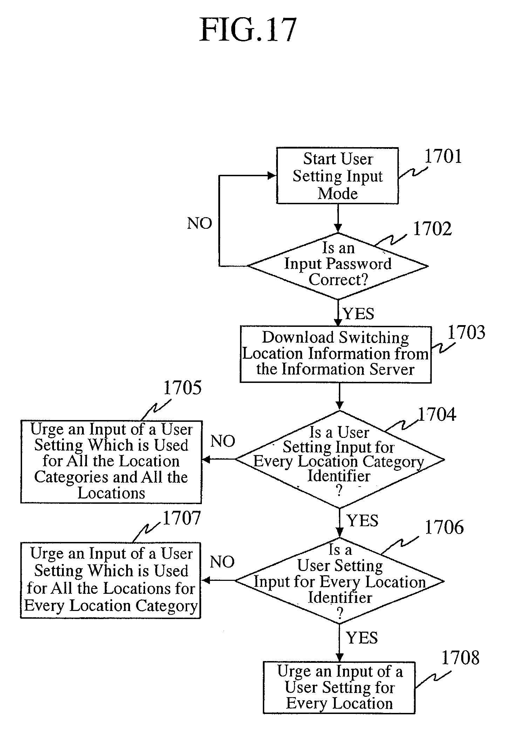

When, in each of step 132, step 133, and step 134, the corresponding one of the process identifiers 151, 152, and 153 to be referred to is not found, the state switching control unit 63 urges the user to input a user setting, and stores the inputted user setting in the form of a process identifier (not shown). For example, as this input method of inputting a user setting, there can be a method as shown in Fig. 17 and as will be explained in below-mentioned embodiment.

As mentioned above, in accordance with this embodiment 4, the transmitter of the state switching instruction signal can transmit the state switching instruction signal while including both the location category identifier which corresponds to the category of a location where mobile phones are responsible to switch between states and the location identifier which corresponds to the location where mobile phones are responsible to switch between states in the state switching instruction signal, and the mobile phone can set up an operation mode thereof for every location category identifier and for every location identifier. The user can therefore change the operation mode of the mobile phone for every category of a location where the mobile phone can receive a state switching instruction signal transmitted thereto, and for every location where the mobile phone can receive a state switching instruction signal transmitted thereto. As a result, a mobile phone which can provide a great convenience for users and a mobile phone system including such mobile phones can be provided.

In the example shown in Fig. 15, the location category identifier and location identifier of a location are identifies provided independently of each other. As an alternative, the location category identifier can construct a part of the location identifier. For example, the location identifier of "A city library" can be set to "001002", and "001" which is the three highmost digits of the location identifier can be the location category identifier indicating "library."

### Embodiment 5.

In embodiment 4, a procedure for making a user setting for every location category identifier and for every location identifier in the mobile phone 2 will be explained. Hereafter, a case in which no user settings are stored in the memory of the mobile phone will be explained as an example.

The state switching control unit 63 of Fig. 14 shifts to a user setting input mode through the user's key manipulation of the key operation unit 25 or in response to a state switching recognition signal.
Fig. 17 is a flow chart illustrating the operation of the mobile phone 2 which is implemented through a control process by the state switching control unit 63 of Fig. 13 in the user setting input mode.

After switching to the user setting input mode, the mobile phone 2 displays a message for urging the user to input a user setting and a message for urging the user to input a password on the display unit 26 thereof (step 1701).
When the user manipulates the key operation unit 25 of the mobile phone 2 so as to input a password, the mobile phone 2 checks to see whether or not the password is correct by connecting with an authentication server via the radio transmission-and-reception unit 21 of Fig. 13 (step 1702). When, in step 1702, judging that the password inputted is incorrect, the mobile phone returns to step 1701 or ends the user setting input mode.
When the password inputted in step 1702 is correct, the mobile phone 2 connects with a predetermined information server via the radio transmission-and-reception unit 21. In this information server, the location category identifier and location identifier of each location where a state switching instruction signal is transmitted, and the user setting which can be set up for each location are stored as switching location information, and the mobile phone 2 downloads this switching location information to the local terminal (step 1703).
Next, the mobile phone 2 displays a screen for making the user select whether to set up a user setting for every location category on the display unit 26 (step 1704) . When the user does not select a setup of settings for every location category in step 1704, the mobile phone displays a screen for urging the user to input a user setting used for all location categories and all locations on the display unit 26 (step 1705). Inputs by the user in step 1704 or step 1705 are stored in the memory area 151 shown in Fig. 15 in the form of a process identifier (not shown).
When the user selects a setup of settings for every location category in step 1704, the mobile phone displays a screen for making the user select whether to make a user setting for every location on the display unit 26 (step 1706). When the user does not select a setup of settings for every location in step 1706, the mobile phone displays a screen for urging the user to input a user setting used for all locations for every location category on the display unit 26 (step 1707). Inputs by the user in step 1706 or step 1707 are stored in the memory area 152 shown in Fig. 15 in the form of a process identifier.
When the user selects a setup of setting for every location in step 1706, the mobile phone displays a screen for urging the user to input a user setting for every location on the display unit 26 (step 1708) . Inputs inputted in step 1708 are stored in the memory area 153.

As mentioned above, in accordance with this embodiment 5, because the user is requested to input a password when inputting a user setting to the mobile phone 2, the mobile phone can prevent anyone other than the owner of the mobile phone 2 from making a user setting with mischief or the like.

Furthermore, in accordance with this embodiment 5, switching location information about each location where a state switching instruction signal is transmitted is stored in the information server, and the mobile phone displays a screen for urging the user to make a user setting on the basis of the switching location information downloaded from the information server. Therefore, the user can make a user setting on the basis of the newest switching location information, and the mobile phone can prevent the user from making an incorrect user setting on the basis of old switching location information.

In addition, in accordance with this embodiment 5, the mobile phone 2 displays a screen for enabling the user to select whether to input a user setting for every location category and a screen for enabling the user to select whether to input a user setting for every location in turn. Therefore, when the user does not desire a setup of a user setting for every location category, the user has only to input a user setting common to all the location categories, and therefore the user can omit the input of a user setting for every location category. Furthermore, when the user does not desire a setup of a user setting for every location, the user has only to input a user setting for every location category, and therefore the user can omit the input of a user setting for every location. Therefore, the convenience of the mobile phone for the user can be improved.

### Embodiment 6.

In accordance with this embodiment 6, the transmitter 1 shown in Fig. 1 transmits the state switching instruction signal while including it into an arbitrary channel, such as a "perch channel", which a mobile phone uses for a radio connection with a base station.
More specifically, in the structure of the transmitter 1 shown in Fig. 2, the radio transmission unit 14 can transmit the state switching instruction signal while including it in the "perch channel" for use in a PDC system mobile phone system which has become widespread in Japan. This "perch channel" is a downlink channel for reception level measurement via which reception level measurement results are received in order to make the mobile phone select a base station from which it will receive an electric wave.

In a mobile phone system which complies with the WCDMA standard, which is expected to become worldwide spread in recent years, the state switching instruction signal can be transmitted while being included in a common pilot channel (Common Pilot Channel) CPICH, a first common control physical channel (Primary Common Control Physical Channel) P-CCPCH, a second common control physical channel (Secondary Common Control Physical Channel) S-CCPCH, an individual physical channel DPCH (Dedicated Physical Channel), or the like.
In the WCDMA standard, the channel for receive level measurement which is used for making the mobile phone select a base station from which it will receive an electric wave is the CPICH, and this CPICH includes two types of channels: a first CPICH (Primary CPICH) and a second CPICH (Secondary CPICH) and a symbol sequence which is transmitted in each of these first and second CPICHs is decided beforehand. It is therefore desirable that from the viewpoint of compatibility with the WCDMA standard, the state switching instruction signal is transmitted using a common physical channel other than the CPICH. Particularly, it is desirable that the state switching instruction signal is transmitted while being included in a transport channel BCH (Broadcast Channel) which is mapped to a P-CCPCH which the mobile phone receives after performing a cell search using the CPICH.

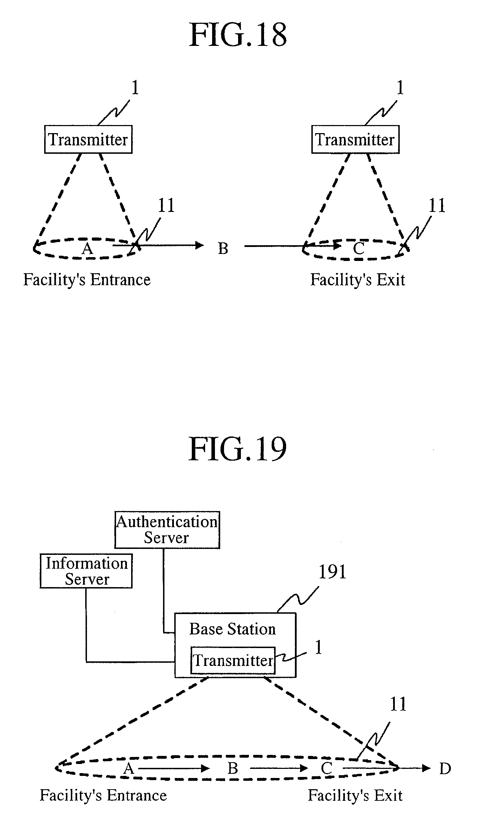

Fig. 18 is a diagram illustrating the mobile phone system in the case of transmitting the state switching instruction signal while including it in the "perch channel." In Fig. 18, the transmitter 1 shown in Fig. 1 is disposed in each of the vicinity of an entrance of a facility, such as a library, and the vicinity of an exit of the facility. A state switching instruction signal for instructing mobile phones to switch to either the power supply OFF mode or the manner mode is transmitted to the transmission range 11 in the vicinity of the entrance, and a state switching instruction signal for instructing mobile phones to switch to the normal mode is transmitted to the transmission range 11 in the vicinity of the exit. The transmitter 1 in the vicinity of each of the entrance and the exit does not have the functions of a so-called perfect base station, it has only a function of transmitting a signal including the state switching instruction signal via the perch channel.

When entering the transmission range 11 in the vicinity of the entrance (for example, a point A), the mobile phone 2 receives a perch channel signal from the transmitter 1 in the vicinity of the entrance because the reception level of the "perch channel" is the highest. As a result, the mobile phone 2 carries out a state changing process on the basis of the state switching instruction signal included in this "perch channel" signal. Because the transmitter 1 does not have the functions of a perfect base station, the mobile phone cannot telephone or communicate with another phone or a server by using this transmitter 1 as a relay base station.

The mobile phone 2 then switches to the manner mode in the vicinity of the entrance, and moves into the facility (for example, a point B) . Because the reception power of the "perch channel" not from the transmitter 1 but from a general base station becomes the highest in the facility, the mobile phone 2 can telephone or communicate with another phone or a server via the base station. However, at this time, because the mobile phone 2 is placed in the manner mode, even if the mobile phone 2 detects an incoming call, the mobile phone 2 does not produce any ringer tone, but notifies the incoming call to the user of the mobile phone 2 with a vibration of the mobile phone 2.

Next, when entering the transmission range 11 in the vicinity of the exit (for example, a point C), the mobile phone 2 receives a perch channel signal from the transmitter 1 in the vicinity of the exit because the reception level of the "perch channel" is the highest. As a result, the mobile phone 2 carries out a process of, for example, switching from the manner mode to the normal mode.

In this embodiment 6, when the mobile phone 2 needs to connect with another server, such as an authentication server or an information server, while passing through the vicinity of the entrance of a facility, the mobile phone 2 cannot carry out communications by way of a general base station and therefore cannot communicate with either the authentication server or the information server because the mobile phone 2 receives a signal from the transmitter 1 in the vicinity of the entrance. Therefore, after the mobile phone 2 comes out of the transmission range 11 in the vicinity of the entrance, the mobile phone 2 carries out communications with either the authentication server or the information server. As an alternative, the mobile phone 2 can have other communication functions as well as the function of communicating with a general base station, and can connect with either the authentication server or the information server within the transmission range 11 using the other communication function.

### Embodiment 7.

In accordance with embodiment 6, the transmitter 1 does not have the functions of a general base station, but has only a function of transmitting a "perch channel" signal including the state switching instruction signal. Furthermore, in accordance with embodiment 6, the transmitter 1 is individually disposed in each of an entrance and an exit of one facility. In accordance with this embodiment 7, the transmitter 1. has the functions of a general base station, and transmits the state switching instruction signal while including it into a "perch channel." More specifically, the transmitter of this embodiment differs from a general base station in that it transmits the state switching instruction signal while including it into the "perch channel." Furthermore, in accordance with this embodiment 7, the transmission range 11 of the transmitter 1 is so constructed as to cover almost all the area of one facility. More specifically, a mobile phone 2 staying in the facility receives the state switching instruction signal from the transmitter 1 almost at all times, and continues to be instructed to switch to a certain state.

Fig. 19 is a diagram illustrating the mobile phone system in accordance with this embodiment 7. In Fig. 19, reference numeral 191 denotes a general base station which has all the functions of the transmitter 1 shown in Fig. 1. In Fig. 19, the transmission range 11 which the "perch channel" signal from the base station 191 can reach is so adjusted as to approximately match with a range in which mobile phones are responsible to switch between states in a facility, such as a library. In this embodiment 7, the base station 191 which has the functions of a general base station and which has the functions of the transmitter 1 shown in Fig. 1 is disposed for every location, such as a library or an art museum, in which a state switching instruction signal is transmitted.

Because the reception level of a "perch channel" signal from the base station 191 is the highest in the transmission range 11 of the base station 191, the mobile phone 2 receives this perch channel signal. As a result, the mobile phone 2 carries out a state changing process on the basis of the state switching instruction signal included in this "perch channel."
When in the state changing process, the mobile phone needs to connect with another server, such as an authentication server or an information server, the mobile phone 2 can communicate with the base station 191 and can telephone or communicate with the server via the base station 191 because the mobile phone 2 receives the "perch channel" signal from the base station 191.

When the mobile phone 2 exits from the transmission range 11 of the base station 191, i.e., exits from the facility, the mobile phone stops receiving the "perch channel" signal from the base station 191 because the reception level of a "perch channel" from other than the base station 191 becomes high. The mobile phone 2 then detects that the "perch channel" signal from this base station 191 is no longer received, and returns the state thereof to the state for every state switching, i.e., the state in which the mobile phone 2 was placed before entering the transmission range 11.

The base station 191 can transmit a state switching suspending request signal for making a request to suspend the state switching according to the state switching instruction signal. When detecting reception of this state switching suspending request signal, the mobile phone 2 automatically changes the state of the local terminal to the state in which the mobile phone was placed before performing the switching according to the state switching instruction signal.

The mobile phone 2 can carry out a state switching forcible suspending process of forcedly switching from the state in which the mobile phone was placed after per forming the state switching according to the state switching instruction signal to another state or the state in which the mobile phone was placed before performing the state switching through the user's manipulation of the key operation unit 25. In this case, because the mobile phone 25 receives the state switching instruction signal again immediately after performing the state switching forcible suspending process and then prevents the execution of the state switching, the mobile phone does not carry out the state switching according to the state switching instruction signal until it receives a state switching instruction signal different from the state switching instruction signal which it has received just before performing the state switching forcible suspending process after performing the state switching forcible suspending process, or does not carry out the state switching operation according to the state switching instruction signal during a predetermined time period after performing the state switching forcible suspending process.

The transmitter 1 can be disposed in a real estate, such as a library, an art museum, or a movie theater, and can be alternatively disposed in a public means of transportation, such as a train or a bus. More specifically, the base station 191 in accordance with this embodiment 7 can be disposed in a moving facility, such as a train or a bus.

Although the illustrated embodiments of the present invention have been explained, it should be understood that the present invention is not limited to the various preferred embodiments described above, all embodiments including modifications, deletions, combinations (for example, a combination of aspects which are crossing various embodiments), applications and/or changes, which can be recognized by those skilled in the art on the basis of this disclosure, can be included in the present invention. It should also be understood that the bounds of the claims should be widely interpreted on the basis of the terms used in the claims, and the present invention is not limited to the embodiments mentioned in this specification or the prosecution of the present application and these embodiments are not exclusive.

### Industrial Applicability

The present invention can be applied to a mobile phone, such as a mobile phone which complies with the PDC or WCDMA standard, a base station, and so on.

## Claims

1. A state switching method for use in a mobile phone which switches between two or more states including at least a state in which a ringer tone is switched on and a state in which a ringer tone is switched off, said method comprising the steps of:
receiving a state switching instruction signal for instructing the local terminal to switch to at least one of said two or more states;
determining whether to switch the local terminal to a state specified by said state switching instruction signal on a basis of a user setting stored in a memory of the local terminal; and
carrying out a control operation of switching the local terminal to the state specified by said state switching instruction signal when, in said determining step, it is determined that the switching of the local terminal to the state specified by said state switching instruction signal will be carried out.

2. The state switching method for use in the mobile phone according to claim 1, **characterized in that** said step of carrying out the control operation is the step of, when it is determined that the switching of the local terminal to the state specified by said state switching instruction signal will not be carried out, carrying out a control operation of switching the local terminal to a state different from the state specified by said state switching instruction signal on a basis of said user setting.

3. The state switching method for use in the mobile phone according to claim 1, **characterized in that** said step of carrying out the control operation is the step of, when it is determined that the switching of the local terminal to the state specified by said state switching instruction signal will not be carried out, not switching the local terminal to any other state.

4. The state switching method for use in the mobile phone according to claim 1, **characterized in that** said state switching instruction signal includes an identifier which corresponds to a location where the mobile phone is responsible to switch to the state specified by said state switching instruction signal and said user setting can be set up for every said identifier, and said determining step is the step of determining whether to switch the local terminal to the state specified by said state switching instruction signal on a basis of a user setting which corresponds to said identifier included in said received state switching instruction signal.

5. The state switching method for use in the mobile phone according to claim 1, **characterized in that** said state switching instruction signal includes an identifier which corresponds to a category of a location where the mobile phone is responsible to switch to the state specified by said state switching instruction signal and said user setting can be set up for every said identifier, and said determining step is the step of determining whether to switch the local terminal to the state specified by said state switching instruction signal on a basis of a user setting which corresponds to said identifier included in said received state switching instruction signal.

6. The state switching method for use in the mobile phone according to claim 1, **characterized in that** said determining step includes the step of judging whether or not said user setting is stored in a memory of the local terminal, the step of urging a user to input said user setting when, in said judging step, it is judged that said user setting is not stored in the memory, and the step of storing the user setting inputted from the user in said memory.

7. The state switching method for use in the mobile phone according to claim 5, **characterized in that** saidmethod includes the steps of, when, in said receiving step, said state switching instruction signal is received, judging whether or not a user setting which corresponds to said identifier included in the received state switching instruction signal is stored in a memory of the local terminal, urging a user to input a user setting which corresponds to said identifier when, in said judging step, it is judged that the user setting is not stored in the memory, and storing the user setting inputted from the user and corresponding to said identifier in said memory.

8. The state switching method for use in the mobile phone according to claim 6, **characterized in that** saidmethod includes the steps of, when, in said receiving step, said state switching instruction signal is received, judging whether or not a user setting which corresponds to said identifier included in the received state switching instruction signal is stored in a memory of the local terminal, urging a user to input a user setting which corresponds to said identifier when, in said judging step, it is judged that the user setting is not stored in the memory, and storing the user setting inputted from the user and corresponding to said identifier in said memory.

9. The state switching method for use in the mobile phone according to claim 4, **characterized in that** the step of urging the user to input said user setting includes the step of urging the user to input a password for confirming an identity of the user.

10. The state switching method for use in the mobile phone according to claim 5, **characterized in that** said method further includes the step of acquiring said identifier included in said state switching instruction signal from a predetermined server, the step of urging the user to input a user setting for said identifier, and the step of storing the user setting inputted from the user, which corresponds to said identifier, in a memory of the local terminal.

11. The state switching method for use in the mobile phone according to claim 6, **characterized in that** said method further includes the step of acquiring said identifier included in said state switching instruction signal from a predetermined server, the step of urging the user to input a user setting for said identifier, and the step of storing the user setting inputted from the user, which corresponds to said identifier, in a memory of the local terminal.

12. The state switching method for use in the mobile phone according to claim 5, **characterized in that** said method further includes the step of urging the user to input a user setting common to two or more identifiers.

13. The state switching method for use in the mobile phone according to claim 6, **characterized in that** said method further includes the step of urging the user to input a user setting common to two or more identifiers.

14. The state switching method for use in the mobile phone according to claim 9, **characterized in that** said confirmation of the identity of the user using said password is carried out by transmitting the password inputted by the user to an authentication server.

15. The state switching method for use in the mobile phone according to claim 1, **characterized in that** said receiving step is the step of receiving said state switching instruction signal via a perch channel.

16. The state switching method for use in the mobile phone according to claim 1, **characterized in that** said receiving step is the step of receiving said state switching instruction signal via a channel transmitted from a base station.

17. The state switching method for use in the mobile phone according to claim 1, **characterized in that** said receiving step is the step of receiving said state switching instruction signal via a CPICH, a P-CCPCH, S-CCPCH, or a DPCH transmitted from a base station.

18. The state switching method for use in the mobile phone according to claim 1, **characterized in that** said method further includes the step of detecting whether said state switching instruction signal is not received after the state switching is carried out in said control step, and the step of returning the local terminal to the state in which it was placed before the state switching is carried out when said state switching instruction signal is not received.

19. A mobile phone which switches between two or more states including at least a state in which a ringer tone is switched on and a state in which a ringer tone is switched off, said mobile phone comprising:
a receiving means for receiving a state switching instruction signal for instructing the local terminal to switch to at least one of said two or more states;
a determining means for determining whether to switch the local terminal to the state specified by said state switching instruction signal on a basis of a user setting stored in a memory of the local terminal; and
a control means for switching the local terminal to the state specified by said state switching instruction signal when said determining means determines to carry out the switching of the local terminal to the state specified by said state switching instruction signal.

20. A transmitter which transmits a state switching instruction signal to a mobile phone which switches between two or more states including at least a state in which a ringer tone is switched on and a state in which a ringer tone is switched off, the state switching instruction signal indicating an instruction to switch to at least one of said two or more states, said transmitter comprising:
a state identifier storage means for storing an identifier of a state specified by said state switching instruction signal;
a first storage means for storing an identifier which corresponds to a location which the mobile phone is responsible to switch to the state specified by said state switching instruction signal;
a second storage means for storing an identifier which corresponds to a category of the location which the mobile phone is responsible to switch to the state specified by said state switching instruction signal;
a state switching instruction signal generating means for generating said state switching instruction signal containing the identifiers respectively outputted from said state identifier storage means, said first storage means, and said second storage means; and
a transmitting unit for transmitting the state switching instruction signal outputted by said state switching instruction signal generating means.
